(19) Europäisches Patentamt
European Patent Office
Office européen des brevets

(11) **EP 2 015 301 A1**

(12) **EUROPEAN PATENT APPLICATION**

(43) Date of publication:
**14.01.2009 Bulletin 2009/03**

(51) Int Cl.:
***G11B 7/24*** *(2006.01)*

(21) Application number: **08015050.1**

(22) Date of filing: **04.06.2003**

(84) Designated Contracting States:
**AT BE BG CH CY CZ DE DK EE ES FI FR GB GR HU IE IT LI LU MC NL PT RO SE SI SK TR**

(30) Priority: **05.06.2002 KR 20020031741**
**05.06.2002 KR 20020031742**

(62) Document number(s) of the earlier application(s) in accordance with Art. 76 EPC:
**03757204.7 / 1 509 914**

(71) Applicant: **LG Electronics Inc.**
**Seoul 150-721 (KR)**

(72) Inventors:
• **Kim, Jin Yong**
**Seongnam, Kyunggi-do 463-928 (KR)**

• **Park, Kyung Chan**
**Seoul 135-110 (KR)**
• **Jeong, Seong Yun**
**Seoul 137-140 (KR)**

(74) Representative: **Diehl & Partner**
**Patentanwälte**
**Augustenstrasse 46**
**80333 München (DE)**

Remarks:
This application was filed on 26-08-2008 as a divisional application to the application mentioned under INID code 62.

(54) **High-density dual-layer optical disc**

(57) A high-density dual-layer optical disc is disclosed, comprising: a light incident surface and an opposite surface; a substrate including a transparent layer having a refractive index; a first recording layer and a second recording layer, the first recording layer being located spaced apart from the light incident surface by a first substrate thickness (t1), and the second recording layer being located between the first recording surface and the opposite surface at a second substrate thickness (t2) from the light incident surface; wherein a distance between the first recording layer and the second recording layer is set in a range of $19 \pm 15$ $\mu$m, and wherein the refractive index is between 1.45 and 1.70.

FIG. 8

**Description**

**1. TECHNICAL FIELD**

The present invention relates to a high-density dual-layer optical disc having first and second recording layers, which are both positioned to one side of a central plane bisecting the thickness of the disc, and close to a disc surface.

**2. BACKGROUND ART**

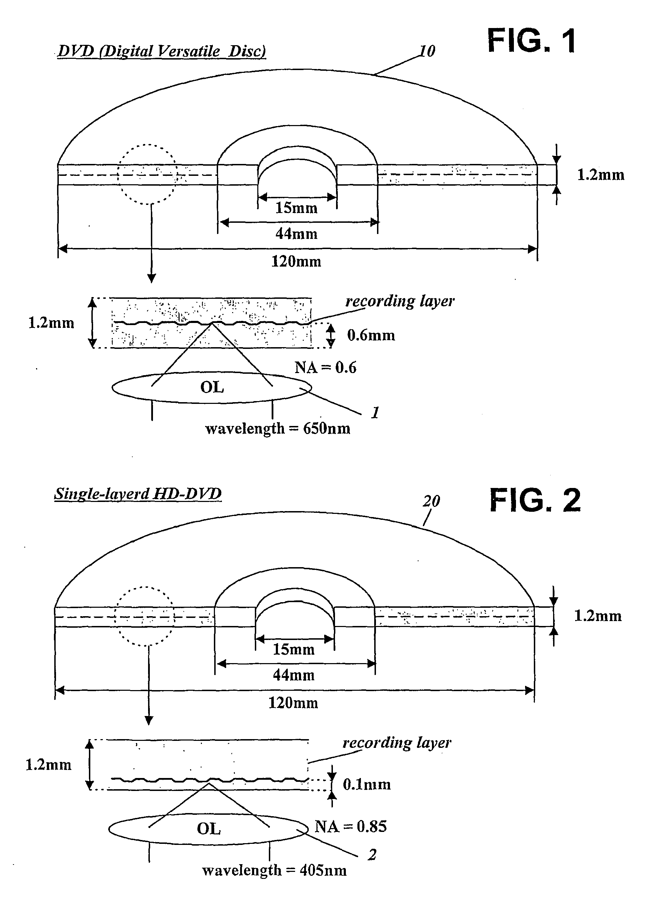

Fig. 1 shows the structure of a normal DVD(Digital Versatile Disc). As shown in Fig. 1, the DVD, which is denoted by the reference numeral 10, has a diameter of 120 mm and a thickness of 1.2 mm, and is formed with a center hole having a diameter of 15 mm, and a clamping region having a diameter of 44 mm and adapted to be clamped by a turntable and clamper included in an optical disc apparatus.

The DVD 10 has a recording layer, in which data is recorded in a pit pattern. The recording layer of the DVD 10 is positioned at a depth of about 0.6 mm from a disc surface facing an objective lens 1 of an optical pickup device included in the optical disc apparatus. The objective lens 1 of the optical pickup device for the DVD 10 has a numerical aperture NA equal to 0.6.

Fig. 2 shows the structure of a high-density single layer DVD. As shown in Fig. 2, the high-density single layer DVD, which is denoted by the reference numeral 20, has a diameter of 120 mm and a thickness of 1.2 mm, and is formed with a center hole having a diameter of 15 mm, and a clamping region having a diameter of 44 mm and adapted to be clamped by a turntable and clamper included in an optical disc apparatus. The high-density single layer DVD 20 has a data recording layer, which is positioned at a depth of about 0.1 mm from a disc surface facing an objective lens 2 of an optical pickup device included in the optical disc apparatus.

The objective lens 2 of the optical pickup device for the high-density single layer DVD 20 has a numerical aperture NA equal to 0.85, which is a relatively large value in comparison with that of the objective lens 1 for the DVD 10. The objective lens 2 of the optical pickup device adopts a short wave laser beam having a wavelength shorter than that used in the DVD 10 for the reproduction or recording of high-density data.

That is, for the reproduction or recording of high-density data, the DVD 10 uses a laser beam having a wavelength of 650 nm, whereas the high-density single layer DVD 20 uses a laser beam having a wavelength of 405 nm.

By emitting the short wave laser beam and achieving an increase in the numerical aperture of the objective lens, especially in a state of arranging the objective lens 2 of the optical pickup device close to the recording layer of the high-density single layer DVD 20, it is possible to form a small beam spot on a pit of high data density by intensively focusing the laser beam, and to minimize the length of a transparent layer of the short wave laser beam. As a result, the variation of the laser beam's properties and the occurrence of aberration can be minimized.

In recent years many companies have developed high-density dual-layer optical discs, for example, a high-density dual-layer DVD or high-density dual-layer blu-ray disc(hereafter referred to as an "high-density dual-layer BD"), as substitutes for the high-density single layer DVD. The high-density dual-layer optical disc can record and store a large quantity of video and audio data, having about twice the capacity of the high-density single layer DVD, for a long time.

In the case of the high-density dual-layer optical disc as stated above, however, there is no way to effectively restrict a wave front error, which is inevitably generated all over the optical disc due to a spherical aberration produced by a variation in the substrate thickness from the light incidence surface of a transparent substrate to respective first and second recording layers and also due to a coma aberration produced by the tilt of the objective lens included in the optical pickup device. Therefore, a solution to this wave front error is urgently required in the field of the high-density dual-layer optical disc.

**3. DISCLOSURE OF INVENTION**

It is an object of the present invention to provide a new high-density dual-layer optical disc having a first and a second recording layers, the optical disc being configured to minimize the generation of a wave front error due to the substrate thickness from a light incidence surface of the transparent substrate to the respective first and second recording layers. An Example of the high-density dual-layer optical disc is a high-density dual-layer DVD or high-density dual-layer blu-disc.

It is an object of the present invention to provide a new high-density dual-layer optical disc having first and second recording layers, the optical disc being configured to minimize a wave front error generated all over the optical disc due to a spherical aberration produced by a variation in the substrate thickness from the light incidence surface of a transparent substrate(i.e. a cover layer) to respective first and second recording layers and also due to a coma aberration produced by the tilt of an objective lens included in an optical pickup device.

In accordance with the present invention, the above and other objects can be accomplished by the provision of a high-density dual-layer optical disc having a first and a second recording layers positioned to one side of a central plane bisecting the thickness of the disc, and close to a disc surface, a first substrate thickness from a light incidence surface of a transparent substrate to the first recording layer corresponding to a value obtained by subtracting half a distance between the first and the second recording layers from a substrate thickness from a light incidence surface of a transparent substrate to a recording layer in a high-density single layer optical disc, and a second substrate thickness from the light incidence surface of the transparent substrate to the second recording layer corresponding to a value obtained by adding half the distance between the first and second recording layers to the substrate thickness from the light incidence surface of the transparent substrate to the recording layer in the high-density single layer optical disc.

In accordance with the present invention, the above and other objects can be accomplished by the provision of a high-density dual-layer optical disc having first and second recording layers positioned to one side of a central plane bisecting the thickness of the disc, and close to a light incidence surface, a first substrate thickness from the light incidence surface of the transparent substrate to the first recording layer having a value of more than 70 $\mu$m at the minimum, a second substrate thickness from the light incidence surface of the transparent substrate to the second recording layer having a value of less than 108 $\mu$m at the maximum, and a distance between the first and second recording layers having a value within a range of 19 $\mu$m $\pm$5 $\mu$m.

Preferably, the substrate thickness from the light incidence surface of the transparent substrate to the recording layer in the high-density single layer optical disc may be 0.1 mm. The distance between the first and the second recording layers may be 0.02 mm. The first and the second substrate thickness may be 0.09 mm and 0.11 mm, respectively.

Preferably, the first substrate thickness and second substrate thickness may be variably set to an extent that a refractive index n of the transparent substrate is in a range of 1.45 to 1.70. Where the refractive index n of the transparent substrate is equal to 1.60, the first substrate thickness and second substrate thickness may be set at 79.5 $\mu$m $\pm$5 $\mu$m, and 98.5 $\mu$m $\pm$5 $\mu$m, respectively.

## 4. BRIEF DESCRIPTION OF DRAWINGS

The above and other objects, features and other advantages of the present invention will be more clearly understood from the following detailed description taken in conjunction with the accompanying drawings, in which:

Fig. 1 shows the structure of a normal DVD;
Fig. 2 shows the structure of a general high-density single layer DVD;
Fig. 3 shows the example structure of a high-density dual-layer optical disc to explain the present invention;
Fig. 4 is a graph for comparing a variation in wave front error caused from a spherical aberration with a variation in the substrate thickness from the light incidence surface of a transparent substrate to recording layers in the high-density dual-layer optical disc;
Fig. 5 shows the structure of a high-density dual-layer optical disc in accordance with the present invention;
Figs. 6A to 6C are graphs for comparing a variation in wave front error caused from the tilt of an objective lens with a variation in the substrate thickness from the light incidence surface of a transparent substrate to recording layers in the high-density dual-layer optical disc;
Fig. 7 is a graph showing the range of the substrate thickness from the light incidence surface of a transparent substrate to first and second recording layers applicable to the high-density dual-layer optical disc in accordance with the present invention; and
Fig. 8 shows the structure of a high-density dual-layer optical disc in accordance with an embodiment of the present invention.

## 5. MODES FOR CARRYING OUT THE INVENTION

Prior to describing a new high-density dual-layer optical disc in accordance with the present invention, a general high-density dual-layer DVD or high-density dual-layer BD will be firstly described.

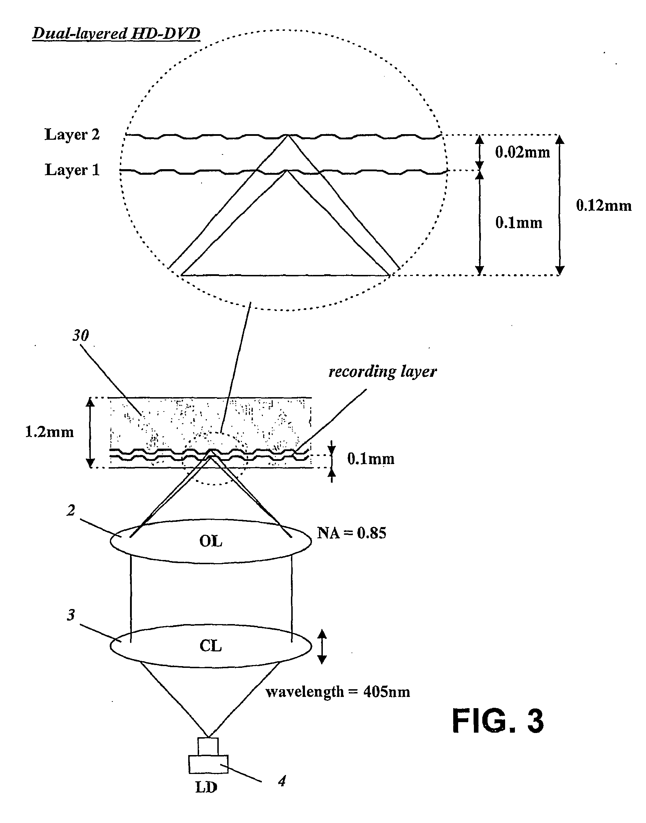

The general high-density dual-layer DVD, which is denoted by the reference numeral 30, has a diameter of 120 mm and a thickness of 1.2 mm, and is formed with a center hole having a diameter of 15 mm, and a clamping region having a diameter of 44 mm and adapted to be clamped by a turntable and clamper included in an optical disc apparatus. The high-density dual-layer DVD 30 comprises a first recording layer, which is formed on the basis of a recording layer of a general high-density single layer DVD, and a second recording layer spaced apart from the first recording layer by a distance of 0.02 mm. In detail, as shown in Fig. 3, the first recording layer of the high-density dual-layer DVD 30 is positioned at a depth of 0.1 mm from a disc surface facing to an objective lens 2 of an optical pickup device included in the optical disc apparatus, and the second recording layer is positioned at a depth of 0.12 mm from the disc surface.

The objective lens 2 of the optical pickup device for the high-density dual-layer optical disc has a numerical aperture NA equal to 0.85, and adopts a laser beam 4 having a wavelength of 405 nm for the reproduction or recording of high-density data in the first and second recording layers, in the same manner as the high-density single layer DVD 20.

Where the optical pickup device adopting the numerical aperture of 0.85 and the wavelength of 405 nm is used to reproduce or record data in the recording layers, a defocusing margin due to the substrate thickness from the light incidence surface of a transparent substrate to the recording layers is reduced considerably according to the following equation 1.

$$DFM = \frac{\lambda}{(NA)^4 \Delta t} \; \ldots\ldots\ldots\ldots\ldots\ldots\ldots\ldots\ldots\ldots\ldots\ldots\ldots \; \text{Eq. (1)}$$

Where, $\lambda$: wavelength, NA : numerical aperture, and $\Delta t$: a variation in the substrate thickness from the light incidence surface of a transparent substrate to recording layers.

It should be noted that an increase in the numerical aperture of the objective lens and a decrease in the wavelength result in a significant reduction of the defocusing margin due to a variation in the substrate thickness from the light incidence surface of a transparent substrate to the recording layers, in comparison with that of the general DVD. This significant reduction of the defocusing margin ultimately acts to increase system noise.

Meanwhile, in case that first recording layer is formed in a position of 0.1mm from the substrate and second recording layer is formed in a position of 0.08mm from the substrate, that arrangement has more guarantee DFM(De-Focusing Margin) than the case 0.1mm of the first recording layer and 0.12mm of the second recording layer.

Therefore, it is desirable that the second recording layer has thickness less than the first recording layer in view of the DFM.

That is, the second recording layer is located within the thickness of 0.1mm.

Also, in addition to the DFM, a spherical aberration, comma aberration, and those WFE must be considered when considering the thickness of respective layer.

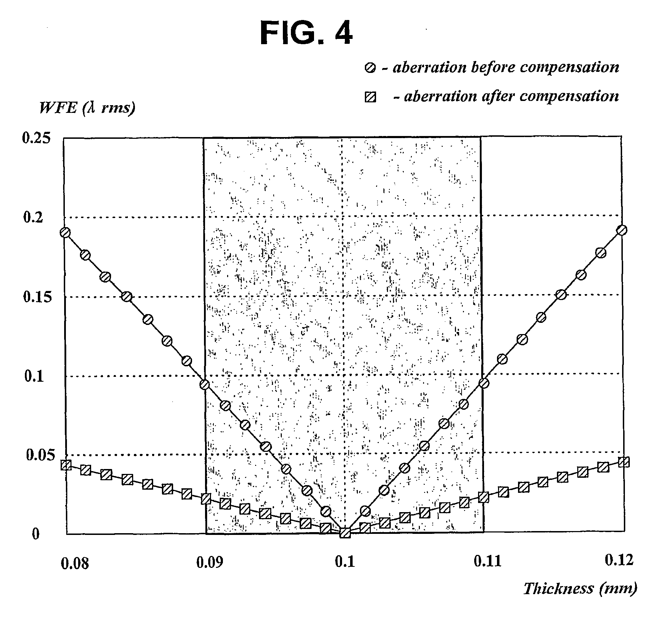

At first, When it is assumed that the substrate thickness from the light incidence surface of a transparent substrate to a first recording layer is 0.1 mm and the wave front error of a beam spot formed on the recording layer is zero, the wave front error varies with the substrate thickness from the light incidence surface of the transparent substrate to the second recording layer as shown in the graph of Fig. 4. For example, where the substrate thickness from the light incidence surface of the transparent substrate to the second recording layer is 0.08 mm or 0.12 mm, the wave front error has a value of about 0.18 $\lambda$ rms.

In general, total aberration shall have a value below than 0.07 $\lambda$ rms in order to not generate an error of large amount in a optical system. In experimental, it is shown that pickup system is no problem if total aberration of pickup has a value below than 0.075 $\lambda$ rms in an actual system.

Now, hereinafter this invention will be considered as a status which is below 0.075 $\lambda$ rms.

As shown in Fig. 4, in case that the thickness to second recording layer from substrate is 0.08mm or 0.12mm, this value considerably exceeds a maximum value of 0.075 $\lambda$ rms acceptable in the actual system.

As stated above, when the substrate thickness from the light incidence surface of the transparent substrate to the respective first and second recording layers are set at 0.1 mm and 0.12 mm, respectively, or set at 0.1mm and 0.08 mm, respectively, the wave front error is about 0.18 $\lambda$ rms unacceptable in the actual system.

Meanwhile, there are several solutions to compensate for the wave front error as stated above. That is, by finely regulating the position of a collimator lens 3 included in the optical disc apparatus, or by additionally installing a liquid crystal device and the like to the optical disc apparatus, the wave front error is reduced to about 0.045 $\lambda$ rms when the substrate thickness from the light incidence surface of the transparent substrate to the second recording layer is 0.08 mm or 0.12 mm.

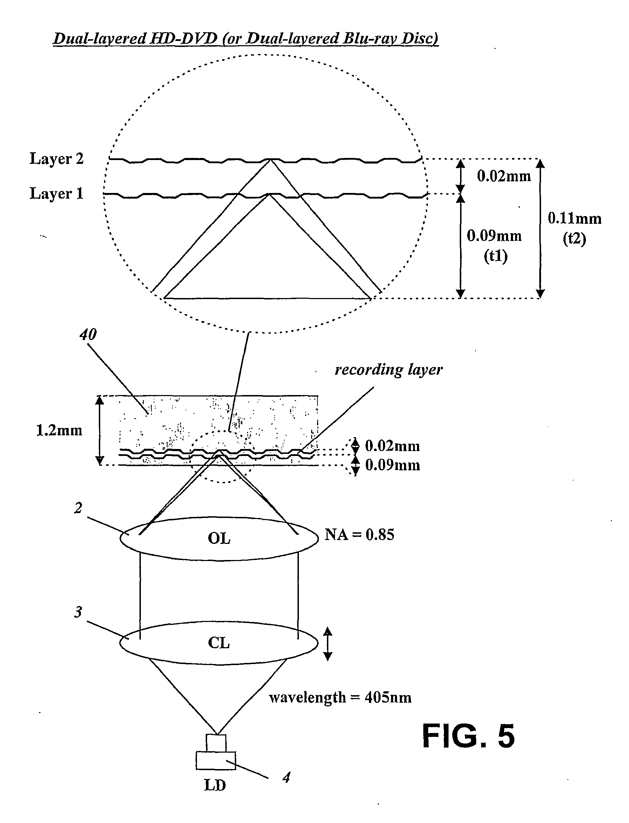

Fig. 5 shows the structure of a high-density dual-layer optical disc in accordance with the present invention. As shown in Fig. 5, the high density dual-layer optical disc, which is denoted by the reference numeral 40, has first and second recording layers. The first substrate thickness 't1' from the light incidence surface of a transparent substrate to the first recording layer corresponds to a value obtained by subtracting half the distance between the first and second recording layers from the substrate thickness from the light incidence surface of a transparent substrate to a recording layer in a general high-density single layer optical disc.

The second substrate thickness 't2' from the light incidence surface of the transparent substrate to the second recording layer corresponds to a value obtained by adding half the distance between the first and second recording layers to the substrate thickness from the light incidence surface of the transparent substrate to the recording layer in the general high-density single layer optical disc.

That is, the high-density dual-layer DVD or high-density dual-layer BD of the present invention has a diameter of 120 mm and a thickness of 1.2 mm, and is formed with a center hole having a diameter of 15 mm, and a clamping region having a diameter of 44 mm and adapted to be clamped by a turntable and clamper included in an optical disc apparatus. The high-density dual-layer DVD 40 of the present invention is provided with the first recording layer positioned at a depth of 0.09 mm from a disc surface facing an objective lens 2 of an optical pickup device included in the optical disc apparatus, and the second recording layer positioned at a depth of 0.11 mm from the disc surface facing the objective lens 2 of the optical pickup device.

Therefore, under the condition as stated above referring to Fig. 4, when the first and second substrate thickness from the light incidence surface of the transparent substrate to the respective first and second recording layers is set at 0.09 mm and 0.11 mm, respectively, the wave front error is only about 0.08 $\lambda$ rms, close to a maximum value of 0.075 $\lambda$ rms acceptable in the actual system. Furthermore, by virtue of finely regulating the position of a collimator lens 3 and the installation of the additional compensation liquid crystal device, the wave front error is reduced to about 0.025 $\lambda$ rms. In this way, the generation of the wave front error due to the substrate thickness from the light incidence surface of the transparent substrate to the recording layers can be effectively restricted.

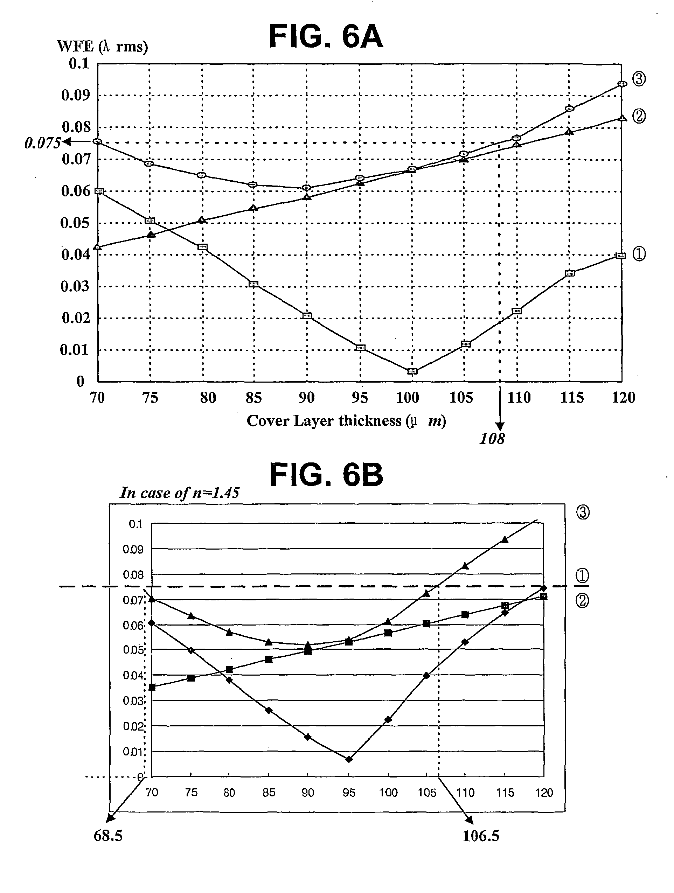

Figs. 6A to 6C are graphs for comparing a variation in wave front error caused from the tilt of the objective lens with a variation in the substrate thickness from the light incidence surface of the transparent substrate to recording layers in the high-density dual-layer optical disc. Referring to Figs. 6A to 6C, a spherical aberration produced by a variation in the substrate thickness from the light incidence surface of a transparent substrate(i.e. a cover layer) to recording layers, in a no-tilt state of an objective lens included in an optical pickup device, defines a line ① respectively shown in Figs. 6A to 6C.

A coma aberration, produced in a state that the objective lens of the optical pickup device has a tilt angle of less than 0.6°, defines a line ② respectively shown in Figs. 6A to 6C. A wave front error generated all over the optical disc caused from the spherical aberration and coma aberration defines a line ③ respectively shown in Figs. 6A to 6C.

In Figs. 6A to 6C, the line ① is drawn by applying the graph shown in Fig. 4, and ② is obtained from the following equation 2.

$$② = t(n^2-1 \ / \ 2n^2)NA^3\alpha \quad \dots\dots\dots\dots\dots\dots\dots\dots \text{Eq. (2)}$$

where 't' is Thickness, 'n' is Refractive ration, NA is Numerical Aperture of objective lens, '$\alpha$' is amount of Tilt.

In general, a general optical system considers, a maximum amount of tilt as 0.6, therefore the comma aberration is applied to the equation based on the value.

That is, the value of the wave front error is calculated according to the following equation 3.

$$③ = \sqrt{①^2 + ②^2} \quad \dots\dots\dots\dots\dots\dots\dots\dots\dots\dots\dots\dots \text{Eq. (3)}$$

Where, ① : spherical aberration produced by a variation in the substrate thickness from the light incidence surface of a transparent substrate to recording layers under a no-tilt state of an objective lens, ② : coma aberration produced under a tilt angle of less than 0.6°at the maximum, and ③ : wave front error generated all over the optical disc due to the spherical aberration and coma aberration.

Therefore, as shown in Fig. 6A, the substrate thickness from the light incidence surface of the transparent substrate to respective first and second recording layers has to be set within a range of about 70 $\mu$m to 108 $\mu$m, in order to satisfy a maximum wave front error value of 0.075 $\lambda$ rms acceptable in an actual system. This result is a value obtained from a consideration of Refractive Index, which means a refractivity of optical disc.

In particular, this result is based on the refractive index of 1.60.

Further, as shown in Fig. 6B, the substrate thickness from the light incidence surface of the transparent substrate to respective first and second recording layers has to be set within a range of about 68.5 $\mu$m to 106.5 $\mu$m, in order to satisfy a maximum wave front error value of 0.075 $\lambda$ rms acceptable in an actual system.

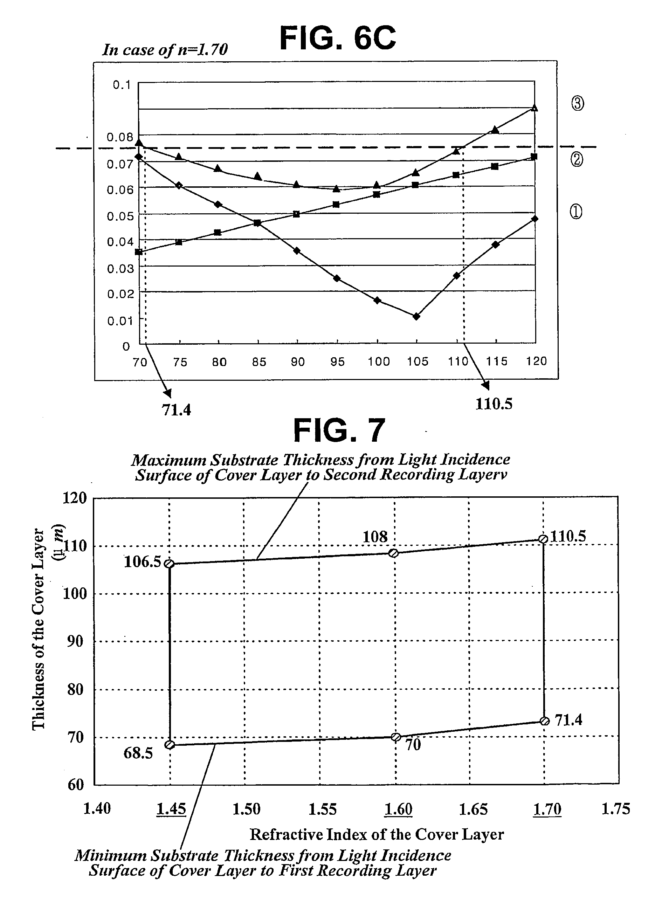

Therefore, as shown in Fig. 6C, the substrate thickness from the light incidence surface of the transparent substrate to respective first and second recording layers has to be set within a range of about 71.4 $\mu$m to 11.5 $\mu$m, in order to satisfy a maximum wave front error value of 0.075 $\lambda$ rms acceptable in an actual system.

This will be described in detail below.

Fig. 7 is a graph showing the range of the substrate thickness from the light incidence surface of a transparent substrate to first and second recording layers applicable to a high-density dual-layer optical disc in accordance with the present invention. As shown in Figs. 6A to 6C, the substrate thickness from the light incidence surface of the transparent substrate to the recording layers is variably set in accordance with a refractive index of the transparent substrate.

For example, where the refractive index n of the transparent substrate is equal to 1.60, the substrate thickness from the light incidence surface of the transparent substrate to the recording layers has to be in a range of about 70 $\mu$m to 108 $\mu$m for satisfying the maximum wave front error value of 0.075 $\lambda$ rms.

In case that the same condition is considered to other refractive index, where the refractive index n of the transparent substrate is equal to 1.45, as shown in Fig. 6B, the substrate thickness from the light incidence surface of the transparent substrate to the recording layers has to be in a range of about 68.5 $\mu$m to 106.5 $\mu$m for satisfying the maximum wave front error value of 0.075 $\lambda$ rms.

In addition, where the refractive index n of the transparent substrate is equal to 1.70, as shown in Fig. 6C, the substrate thickness from the light incidence surface of the transparent substrate to the recording layers has to be in a range of about 110.5 $\mu$m to 71.4 $\mu$m for satisfying the maximum wave front error value of 0. 075 $\lambda$ rms.

In conclusion, the substrate thickness from the light incidence surface of the transparent substrate to the second recording layer is in a range of about 108 $\mu$m + 2.5 (or -1.5) $\mu$m at the maximum, and the substrate thickness from the light incidence surface of the transparent substrate to the first recording layer is in a range of about 70 $\mu$m + 1. 4 (or -1.5) $\mu$m at the minimum.

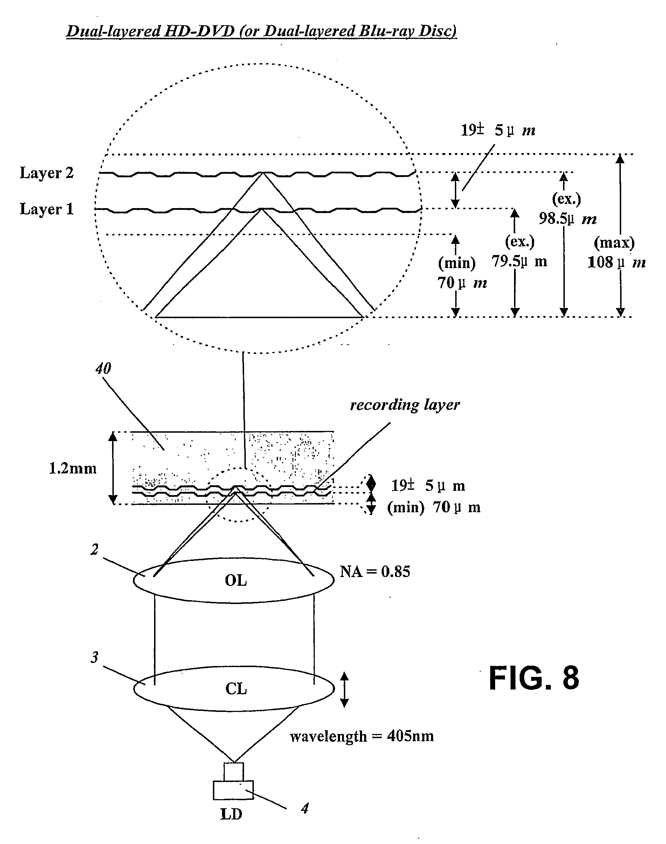

Therefore, referring to Fig. 8 showing the structure of the high-density dual-layer optical disc in accordance with an embodiment of the present invention, the substrate thickness from the light incidence surface of the transparent substrate to the first recording layer is set at a value of 70 $\mu$m at the minimum, $\mu$m at the minimum, the substrate thickness from the light incidence surface of the transparent substrate to the second recording layer is set at a value of 108 $\mu$m at the maximum, and also a distance between the first and second recording layers is set in a range of 19 $\mu$m $\pm$5 $\mu$m.

Now, this will be described in more detail below.

The first and second recording layer can be divided into an average of those values, that is, 89$\mu$m (= 70+108/2) as a boundary, for example, when the first recording layer has the minimum value of 70$\mu$m, the second recording layer must have 89$\mu$m that is a boundary of value, and when the second recording layer has 108$\mu$m, the first recording layer must have 89$\mu$m that is a boundary of value.

Therefore, the distance between the first recording layer and second recording layer can be set to 19$\mu$m. And, if it is considered by manufacturing error margin, it can be set to the value of 19$\mu$m$\pm$5$\mu$m, which is acceptable in current system.

Though the thickness can be considered to a value broader than above value, it desirable that its error margin is $\pm$5$\mu$m when the technology for manufacturing the recording substrate is to be considered. Therefore, a average value between respective layers is most stable if a distance between respective layers is searched for a representative as 19$\mu$m. That is, the average value is 79.5$\mu$m and 98.5$\mu$m respectively if we calculate the average of respective ranges of layers. According to this result, the substrate thickness from the light incidence surface of the transparent substrate to the respective first and second recording layers are set at 79.5 $\mu$m $\pm$5 $\mu$m and 98.5 $\mu$m $\pm$5 $\mu$m, respectively.

Therefore, as shown in Fig. 8, where the refractive index n of the transparent substrate is equal to 1.60, the substrate thickness from the light incidence surface of the transparent substrate to the respective first and second recording layers are set at 79.5 $\mu$m and 98.5 $\mu$m, respectively, and the distance between the first and second recording layers is set in a range of 19 $\mu$m $\pm$5 $\mu$m. In this case, according to the permitted distance limit of $\pm$5 $\mu$m, the substrate thickness from the light incidence surface of the transparent substrate to the respective first and second recording layers are set at 79.5 $\mu$m $\pm$5 $\mu$m and 98.5 $\mu$m $\pm$5 $\mu$m, respectively.

According to the configuration of the high-density dual-layer optical disc, it is possible to effectively restrict the wave front error generated all over the optical disc due to the spherical aberration produced by a variation in the substrate thickness from the light incidence surface of the transparent substrate to the respective first and second recording layers and also due to the coma aberration produced by the tilt of the objective lens.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

As apparent from the above description, the present invention provides a high-density dual-layer optical disc for minimizing a wave front error generated all over the optical disc due to a spherical aberration produced by a variation in the substrate thickness from a light incidence surface of a transparent substrate to respective first and second recording layers and also due to a coma aberration produced by the tilt of an objective lens, and for enabling the more accurate recording or reproduction of signals onto or from the optical disc. In summary, the subject matter described in the following paragraphs, which are numbered for ease of reference, is part of the disclosure of the present application, each of which can be claimed in the present application, and in one or more future divisional applications therefrom:

(1) A high-density dual-layer optical disc, comprising a first recording layer and a second recording layer, the layers being positioned to one side of a central plane bisecting the thickness of the disc, and close to a light incidence surface, wherein: a first substrate thickness from the light incidence surface of a transparent substrate to the first recording layer has a value of more than 70 $\mu$m at the minimum; and a second substrate thickness from the light incidence surface of the transparent substrate to the second recording layer has a value of less than 108 $\mu$m at the

maximum, respectively in state that the refractive index of the transparent substrate is n.

(2) The high-density dual-layer optical disc as set forth in paragraph (1) above, wherein the first substrate thickness and second substrate thickness are set to an extent that a refractive index n of the transparent substrate is 1.60.

(3) The high-density dual-layer optical disc as set forth in paragraph (1) above, a distance between the first and second recording layers is in a range of 19 $\mu$m $\pm$ 5 $\mu$m.

(4) The high-density dual-layer optical disc as set forth in paragraph (1) above, wherein the first substrate thickness and second substrate thickness are variably set to an extent that a refractive index n of the transparent substrate is in a range of 1.45 to 1.70.

(5) The high-density dual-layer optical disc as set forth in paragraph (4), wherein the first substrate thickness and second substrate thickness are set at 79.5 $\mu$m $\pm$ 5 $\mu$m and 98.5 $\mu$m $\pm$ 5 $\mu$m, respectively, where the refractive index n of the transparent substrate is equal to 1.60.

(6) An apparatus for recording or reproducing to or from an optical recording medium, comprising: optical pickup recording or reproducing a data to or from the optical recording medium, said recording medium includes two recording layers which have first recording layer having a thickness value more than 70 $\mu$m at the minimum and second recording layer having a thickness value less than 108 $\mu$m at the maximum, respectively from the light incidence surface of a transparent substrate, respectively in state that the refractive index of the transparent substrate is n; and controller controlling the pickup to record or reproduce data to or from the first or second recording layer of the optical recording medium.

(7) An apparatus of paragraph (6) above, wherein a first substrate thickness from the light incidence surface of a transparent substrate to the first recording layer has a value of more than 70 $\mu$m at the minimum and a second substrate thickness from the light incidence surface of a transparent substrate to the second recording layer has a value of less than 108 $\mu$m at the maximum.

(8) An apparatus of paragraph (6), wherein the first substrate thickness and second substrate thickness are set to an extent that a refractive index n of the transparent substrate is 1.60.

(9) A high-density dual-layer optical disc, comprising a first recording layer and a second recording layer, the layers being positioned to one side of a central plane bisecting the thickness of the disc, and close to a light incidence surface, wherein: a first substrate thickness from the light incidence surface of a transparent substrate to the first recording layer has a value of more than 68.5 $\mu$m at the minimum; and a second substrate thickness from the light incidence surface of the transparent substrate to the second recording layer has a value of less than 110.5 $\mu$m at the maximum, wherein the range of 68.5 $\mu$m to 110.5 $\mu$m is based on a Refractive index ratio 1.45 to 1.70.

(10) The high-density dual-layer optical disc as set forth in paragraph (9) above, wherein a first substrate thickness from the light incidence surface of a transparent substrate to the first recording layer having a value of more than 68.5 $\mu$m at the minimum is set to an extent that a index n of the transparent substrate is 1.45.

(11) The high-density dual-layer optical disc as set forth in paragraph (9) above, wherein a second substrate thickness from the light incidence surface of a transparent substrate to the second recording layer having a value of more than 110.5 $\mu$m at the maximum is set to an extent that a refractive index n of the transparent substrate is 1.70.

(12) The high-density dual-layer optical disc as set forth in paragraph (9) above, a distance between the first and second recording layers is in a range of 19 $\mu$m $\pm$ 5 $\mu$m.

(13) The high-density dual-layer optical disc as set forth in paragraph (12) above, wherein the first substrate thickness and second substrate thickness are set at 79.5 $\mu$m $\pm$ 5 $\mu$m and 98.5 $\mu$m $\pm$ 5 $\mu$m, respectively, where the refractive index ratio of the transparent substrate is equal to 1.60.

(14) An apparatus for recording or reproducing to or from an optical recording medium, comprising: optical pickup recording or reproducing a data to or from the optical recording medium, said recording medium includes two recording layers which have first recording layer having a value of more than 68.5 $\mu$m at the minimum and second recording having a value of less than 110.5 $\mu$m at the maximum, respectively from the light incidence surface of a transparent substrate, respectively in state that the refractive index of the transparent substrate is n; and controller controlling the pickup to record or reproduce data to or from the first or second recording layer of the optical recording medium.

(15) An apparatus of paragraph (14) above, wherein the refractive index ratio is 1.45 to 1.70.

(16) An apparatus of paragraph (14) above, wherein a first substrate thickness from the light incidence surface of a transparent substrate to the first recording layer has a value of more than 70 $\mu$m at the minimum and a second substrate thickness from the light incidence surface of a transparent substrate to the second recording layer has a value of less than 108 $\mu$m at the maximum, respectively in state of the refractive index 1.60 of the transparent substrate.

(17) A high-density dual-layer optical disc, comprising a first recording layer and a second recording layer, the layers being positioned to one side of a central plane bisecting the thickness of the disc, and close to a light incidence wherein said first and second recording layers are located range 68.5 $\mu$m to 110.5 $\mu$m from the light incidence surface of a transparent substrate, in state that a refractive index n of the transparent substrate is 1.45 to 1.70.

(18) The high-density dual-layer optical disc as set forth in paragraph (17) above, wherein a first and second substrate thickness from the light incidence surface of a transparent substrate to the first and second recording layers having a range 68.5 $\mu$m to 106.5 $\mu$m are set to an extent that the refractive index n is 1.45.

(19) The high-density dual-layer optical disc as set forth in paragraph (18) above, wherein a first and second substrate thickness from the light incidence surface of a transparent substrate to the first and second recording layers having a range 70.0 $\mu$m to 108.0 $\mu$m are set to an extent that the refractive index n is 1.60.

(20) The high-density dual-layer optical disc as set forth in paragraph (18) above, wherein a first and second substrate thickness from the light incidence surface of a transparent substrate to the first and second recording layers having a range 71.4 $\mu$m to 110.5 $\mu$m are set to an extent that the refractive index n is 1.70.

(21) A high-density dual-layer optical disc, comprising a first recording layer and a second recording layer, the layers being positioned to one side of a central plane bisecting the thickness of the disc, and close to a light incidence surface, wherein: said first and second recording layers are located within a range 70.0 $\mu$m to 108.0 $\mu$m from the light incidence surface of a transparent substrate, in state that a refractive index n of the transparent substrate is 1.60.

(22) The high-density dual-layer optical disc as set forth in paragraph (12) above, wherein the first substrate thickness and second substrate thickness are set at 79.5 $\mu$m $\pm$ 5 $\mu$m and 98.5 $\mu$m $\pm$ 5 $\mu$m.

(23) An apparatus for recording or reproducing to or from an optical recording medium, comprising: optical pickup recording or reproducing a data to or from the optical recording said recording medium includes two recording layers which have first recording layer and second recording layer, said first recording layer and second recording layer are located within range 68.5 $\mu$m to 110.5 $\mu$m from the light incidence surface of a transparent substrate, in state that a refractive index n of the transparent substrate is in range of 1.45 to 1.70; and controller controlling the pickup to record or reproduce data to or from the first or second recording layer of the optical recording medium.

(24) An apparatus of paragraph (23) above, wherein a first substrate thickness from the light incidence surface of a transparent substrate to the first recording layer has a value of more than 70 $\mu$m at the minimum and a second substrate thickness from the light incidence surface of a transparent substrate to the second recording layer has a value of less than 108 $\mu$m at the maximum, respectively in state that the refractive index n is 1.60.

(25) A high-density dual-layer optical disc, comprising a first recording layer and a second recording layer, the layers being positioned to one side of a central plane bisecting the thickness of the disc, and close to a disc surface, wherein: a first substrate thickness from a light incidence surface of a transparent substrate to the first recording layer corresponds to a value obtained by subtracting half a distance between the first and second recording layers from a substrate thickness from a light incidence surface of a transparent substrate to a recording layer in a high-density single layer optical disc; and a second substrate thickness from the light incidence surface of the transparent substrate to the second recording layer corresponds to a value obtained by adding half the distance between the first and second recording layers to the substrate thickness from the light incidence surface of the transparent substrate to the recording layer in the high-density single layer optical disc.

(26) The high-density dual-layer optical disc as set forth in paragraph (25) above, wherein the substrate thickness from the light incidence surface of the transparent substrate to the recording layer in the high-density single layer optical disc is 0.1 mm.

(27) The high-density dual-layer optical disc as set forth in paragraph (25) above, wherein the distance between the first and second recording layers is 0.02 mm.

(28) The high-density dual-layer optical disc as set forth in paragraph (25) above, wherein the first and second substrate thickness are 0.09 mm and 0.11 mm respectively.

**Claims**

1. A high-density dual-layer optical disc, comprising:

   a light incident surface and an opposite surface;
   a substrate including a transparent layer having a refractive index;
   a first recording layer and a second recording layer, the first recording layer being located spaced apart from the light incident surface by a first substrate thickness t1, and the second recording layer being located between the first recording surface and the opposite surface at a second substrate thickness t2 from the light incident surface;

   wherein a distance between the first recording layer and the second recording layer is at least 14 $\mu$m, and wherein the refractive index is between 1.45 and 1.70.

2. The high-density dual-layer optical disc according to claim 1, wherein the refractive index is 1.60.

3. The high-density dual-layer optical disc according to claim 1, wherein the refractive index is 1.45 or 1.70.

4. The high-density dual-layer optical disc according to claim 3, wherein a minimal first substrate thickness has a value of 68.5 $\mu$m, when n is 1.45.

5. The high-density dual-layer optical disc according to claim 3, wherein a maximal second substrate thickness has a value of 110.5 $\mu$m, when n is 1.70.

6. An apparatus for recording to, or reproducing from an optical recording medium, the apparatus comprising:

   an optical pickup recording or reproducing data to or from the optical recording medium;
   a controller controlling the pickup to record or reproduce data to or from a first and a second recording layer of the optical recording medium;

   wherein the optical recording medium is the high-density dual-layer optical disc of one of the preceding claims.

7. The apparatus according to claim 6, wherein wavelengths used in the optical pickup are 405 nm and 650 nm.

8. The apparatus according to claim 6 or 7, wherein numerical apertures used in the optical pickup are 0.85 and 0.6, respectively.

9. A method of manufacturing a high-density dual-layer optical disc, comprising:

   providing a transparent substrate having a refractive index n and having a light incident surface;
   proving a first recording layer at a first thickness t1 from the incident surface;
   providing a second recording layer at a second thickness t2 from the incident surface and at a distance from the first recording layer;
   providing another surface opposite the light incident surface;
   setting the first and second thicknesses t1, t2 in dependence of the refractive index n such that the distance is at least 14 $\mu$m, and wherein the substrate thicknesses are variably set in accordance with a refractive index n of the transparent substrate.

10. The method of claim 9, wherein, when n is 1.45, t1 is minimally 68.5 $\mu$m and t2 is maximally 106.5 $\mu$m; when n is 1.60, t1 is minimally 70 $\mu$m, and t2 is maximally 108 $\mu$m; and when n is 1.70, t1 is minimally 71.4 $\mu$m, and t2 is maximally 110.5 $\mu$m.

11. A high-density dual-layer optical disc, comprising:

a light incident surface and an opposite surface;
a substrate including a transparent layer having a refractive index;
a first recording layer and a second recording layer, the first recording layer being located spaced apart from the light incident surface by a first substrate thickness t1, and the second recording layer being located between the first recording surface and the opposite surface at a second substrate thickness t2 from the light incident surface;

wherein the refractive index of the transparent layer is between 1.45 and 1.70.

# FIG. 1

*DVD (Digital Versatile Disc)*                                    *10*

1.2mm

15mm

44mm

120mm

*recording layer*

1.2mm                                    0.6mm

NA = 0.6

OL

*1*

wavelength = 650nm

# FIG. 2

*Single-layerd HD-DVD*                                    *20*

1.2mm

15mm

44mm

120mm

*recording layer*

1.2mm                                    0.1mm

OL                    NA = 0.85

*2*

wavelength = 405nm

**_Dual-layered HD-DVD_**

Layer 2

Layer 1

0.02mm

0.1mm

0.12mm

30

_recording layer_

1.2mm

0.1mm

2

OL

NA = 0.85

3

CL

wavelength = 405nm

# FIG. 3

LD

4

# FIG. 4

⊘ - aberration before compensation

▨ - aberration after compensation

_**Dual-layered HD-DVD (or Dual-layered Blu-ray Disc)**_

Layer 2

Layer 1

0.02mm

0.09mm
(t1)

0.11mm
(t2)

40

recording layer

1.2mm

0.02mm
0.09mm

2

OL

NA = 0.85

3

CL

wavelength = 405nm

LD    4

FIG. 5

# FIG. 6A

WFE (λ rms)

Cover Layer thickness (μ m)

108

# FIG. 6B

*In case of n=1.45*

68.5

106.5

## FIG. 6C

*In case of n=1.70*

71.4

110.5

## FIG. 7

*Maximum Substrate Thickness from Light Incidence Surface of Cover Layer to Second Recording Layerv*

Thickness of the Cover Layer (μ m)

Refractive Index of the Cover Layer

*Minimum Substrate Thickness from Light Incidence Surface of Cover Layer to First Recording Layer*

*Dual-layered HD-DVD (or Dual-layered Blu-ray Disc)*

FIG. 8

Europäisches
Patentamt

European
Patent Office

Office européen
des brevets

# EUROPEAN SEARCH REPORT

Application Number

EP 08 01 5050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 193 703 A (PIONEER CORP [JP]) 3 April 2002 (2002-04-03) * paragraphs [0037] - [0052]; figures 2A-2C * | 1,9,11 | INV. G11B7/24 |
| X | NARUMI K ET AL: "REWRITABLE DUAL-LAYER PHASE-CHANGE OPTICAL DISK WITH A BALANCED TRANSMITTANCE STRUCTURE" JAPANESE JOURNAL OF APPLIED PHYSICS, JAPAN SOCIETY OF APPLIED PHYSICS, TOKYO.; JP, vol. 41, no. 5A, PART 01, 1 May 2002 (2002-05-01), pages 2925-2930, XP001186566 ISSN: 0021-4922 * the whole document * | 1,6-9,11 | |
| P,X | WO 02/059890 A (KONINKL PHILIPS ELECTRONICS NV [NL]) 1 August 2002 (2002-08-01) * page 11 - page 12; figures 3,4; example 3 * | 1,2,6-9, 11 | |
| | | | TECHNICAL FIELDS SEARCHED (IPC) |
| E | EP 1 318 510 A (TOKYO SHIBAURA ELECTRIC CO [JP]) 11 June 2003 (2003-06-11) * paragraph [0083] - paragraph [0093]; figures 9-11 * | 1,2,6-9, 11 | G11B |

The present search report has been drawn up for all claims

| Place of search | Date of completion of the search | Examiner |
|---|---|---|
| The Hague | 14 November 2008 | Fagundes-Peters, D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 01 5050

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2008

| Patent document cited in search report | | Publication date | Patent family member(s) | | Publication date |
|---|---|---|---|---|---|
| EP 1193703 | A | 03-04-2002 | JP | 2002175646 A | 21-06-2002 |
| | | | US | 2002036056 A1 | 28-03-2002 |
| WO 02059890 | A | 01-08-2002 | AR | 032269 A1 | 29-10-2003 |
| | | | AT | 321334 T | 15-04-2006 |
| | | | BR | 0109526 A | 10-12-2002 |
| | | | CA | 2435652 A1 | 01-08-2002 |
| | | | CN | 1419693 A | 21-05-2003 |
| | | | CN | 1805029 A | 19-07-2006 |
| | | | CZ | 20023193 A3 | 12-03-2003 |
| | | | DE | 60118102 T2 | 19-10-2006 |
| | | | EP | 1356467 A1 | 29-10-2003 |
| | | | EP | 1667136 A2 | 07-06-2006 |
| | | | ES | 2260168 T3 | 01-11-2006 |
| | | | HK | 1059140 A1 | 20-10-2006 |
| | | | HU | 0300546 A2 | 28-07-2003 |
| | | | JP | 4113777 B2 | 09-07-2008 |
| | | | JP | 2004518240 T | 17-06-2004 |
| | | | JP | 2007035276 A | 08-02-2007 |
| | | | MX | PA02009214 A | 23-05-2003 |
| | | | PL | 361765 A1 | 04-10-2004 |
| | | | PT | 1356467 T | 31-08-2006 |
| | | | TW | 583660 B | 11-04-2004 |
| | | | US | 2002132082 A1 | 19-09-2002 |
| | | | ZA | 200207649 A | 23-09-2003 |
| EP 1318510 | A | 11-06-2003 | CN | 1423253 A | 11-06-2003 |
| | | | JP | 2003173572 A | 20-06-2003 |
| | | | US | 2003108813 A1 | 12-06-2003 |
| | | | US | 2005237915 A1 | 27-10-2005 |

EPO FORM P0459

For more details about this annex : see Official Journal of the European Patent Office, No. 12/82